# EUROPÄISCHE PATENTSCHRIFT

(11) **EP 0 917 942 B1**
(45) Veröffentlichungstag und Bekanntmachung des Hinweises auf die Patenterteilung: **19.03.2003**
(21) Anmeldenummer: 98119098.6
(22) Anmeldetag: 09.10.1998
(51) Int. Cl.: B29C 33/20, B29C 33/26, B29C 44/58

(54) **Werkzeug zum Abformen**
Mould for forming
Moule pour former

(30) Priorität: 21.11.1997 DE 19751624
(43) Veröffentlichungstag der Anmeldung: 26.05.1999
(73) Patentinhaber: J.P. Werkzeug- und Maschinenbau Westharz GmbH, 37520 Osterode (DE)
(72) Erfinder: Peinemann, Carl, 37520 Osterode (DE)
(74) Vertreter: Depmeyer, Jochen

(56) Entgegenhaltungen:
- DE-A- 4 227 031
- DE-B- 1 250 625
- DE-B- 1 253 903
- DE-B- 1 265 393
- DE-U- 8 417 747
- DE-U- 29 720 641
- FR-A- 979 987
- US-A- 3 316 593
- US-A- 3 915 607
- US-A- 4 204 825

## Beschreibung

Die Erfindung geht aus von einem Werkzeug zum Abformen mit einer Verriegelung für Teile des Werkzeuges, bei der an einem Teil des Werkzeuges ein Verriegelungshaken schwenkbar gelagert ist, der in der Wirkstellung ein anderes Teil des Werkzeuges erfasst und nach dem Abformen des Werkstückes zum Öffnen des Werkzeuges in eine Ruhestellung verschwenkbar ist, wobei der Gelenkzapfen des Verriegelungshakens als Exzenter ausgebildet und derart verdrehbar ist, daß der Verriegelungshaken zu seiner Entlastung gegen seine Wirkrichtung bewegbar ist, wobei ein Schwenkhebel zum Verschwenken des Verriegelungshakens vorgesehen ist, der drehfest mit dem Gelenkzapfen verbunden ist.

Um das Werkzeug öffnen bzw. aufklappen zu können, ist es sinnvoll, zunächst den bzw. die Verriegelungshaken zu entlasten, um dann mit einem vertretbaren technischen Aufwand den Verriegelungshaken in seine Ruhestellung derart verschwenken zu können, dass er zum Öffnen des Werkzeuges nicht mehr hinderlich ist. Derartige Maßnahmen sind insb. bei solchen Werkzeugen angebracht, die zum Abformen von Werkstoffen dienen, welche während des Abformens expandieren und so innerhalb des Formnestes Überdruck erzeugen, wie dies z.B. bei Schaum- und Blähwerkstoffen der Fall ist.

Der Exzenter hat somit die Aufgabe, den Verriegelungshaken meist nur geringfügig und etwa in Richtung auf die Verhakungsstelle zu bewegen, damit dann mit einem vertretbaren Kraftaufwand der Verriegelungshaken von seiner Angriffsstelle am anderen Teil des Werkzeuges durch Verschwenken entfernt werden kann.

Ein Werkzeug dieser Art und gemäß dem Oberbegriff des Anspruchs 1 ist aus der US-A-3316593 oder der DE 1250625 B bekannt. Aus der US-A-4204825 ist ferner ein Werkzeug zum Abformen mit einem Verriegelungshaken und einem Schwenkhebel bekannt, wobei der Schwenkhebel Mitnehmer aufweist, die nach Verdrehung eines exzentrischen Gelenkzapfens auf einen Vorsprung am Verriegelungshaken auftreffen, um so ein Widerlager zum Aufhebeln der Formhälften zu bilden. Bei dieser gattungsfremden Vorrichtung ist der Schwenkhebel, nicht jedoch der Verriegelungshaken exzentrisch gelagert, und der Schwenkhebel dient nicht zum Verschwenken des Verriegelungshakens.

Der Erfindung liegt die Aufgabe zugrunde, die für die Verschwenkung des Verriegelungshakens in die Ruhestellung notwendige Kraftanstrengung zu verringern.

Diese Aufgabe wird erfindungsgemäß dadurch gelöst, daß der Schwenkhebel mit einem ersten Schwenkweg den Gelenkzapfen verdrehen kann und mit einem anschließenden zweiten Schwenkweg den Verriegelungshaken in seine Ruhestellung verschwenken kann, wobei der Verriegelungshaken einen Vorsprung und der Schwenkhebel Mitnehmer aufweisen zum Auftreffen des Mitnehmers auf den Vorsprung des Verriegelungshakens nach einer Verdrehung des Gelenkzapfens.

Somit dient der Schwenkhebel zum Verschwenken des Verriegelungshakens auch zum Verstellen des Gelenkbolzens bzw. des von ihm gebildeten Exzenters. Dabei ist der Schwenkhebel drehfest mit dem Gelenkbolzen verbunden; zudem erhält dieser Hebel einen Mitnehmer, der jedoch erst dann wirksam werden soll, wenn der Schwenkhebel eine ausreichende Verdrehung des Gelenkzapfens herbeigeführt hat bzw. die Entlastung des Verriegelungshakens vollzogen hat, um dann durch eine weitere Schwenkbewegung des Schwenkhebels eine Verschwenkung des Verriegelungshakens auszuführen. Vorteilhaft ist es ferner, wenn die Verriegelungshaken, die in Einfach- oder aber auch in Zwillingsanordnung benutzt werden können, an der Gelenkstelle gegabelt sind. In diesem Falle wird der Schwenkhebel innerhalb der Gabel am Gelenkzapfen gelagert.

Weitere Einzelheiten der Erfindung werden anhand der Zeichnung erläutert, in der ein Ausführungsbeispiel der Erfindung dargestellt ist. Es zeigen :
- Fig. 1: ein Werkzeug zum Abformen von flachen Kunststoffteilen als Schaumkörper,
- Fig. 2: eine Stirnansicht des Werkzeuges gemäss Fig. 1 in Richtung des Pfeiles II gesehen,
- Fig. 3: einen Teilschnitt von Fig. 1 nach der Linie III - III und
- Fig. 4: einen Schnitt nach der Linie IV - IV von Fig. 3.

Das Werkzeug weist eine obere Platte 1 und eine untere Platte 2 auf; beide Platten 1, 2 sind an ihrem hinteren Ende scharnierartig miteinander verbunden. Der Scharnierbolzen ist mit 3 bezeichnet. Zwischen den beiden Platten 1, 2 befindet sich eine Form 4. Ihr Oberteil 5 ist mit der Platte 1 und das Unterteil 6 ist mit der Platte 2 verbunden. Das Formnest zum Abformen von flachen Kunststofformteilen aus Schaummaterial ist mit 7 bezeichnet ( gestrichelt dargestellt ).

Die somit aufklappbare Form 4 bzw. deren Platten 1, 2 werden am vorderen Ende der vorerwähnten Platten während des Abformvorganges durch eine Veriegelungseinrichtung zusammengehalten. Dazu sind zu beiden Seiten der Platten 1, 2 verschwenkbare Verriegelungshaken 8 vorgesehen, deren Gelenkzapfen 9 an der Oberseite der Platte 1 an einem dort befindlichen,doppelten Lagerbock 10 verdrehbar gelagert ist. In der Wirkstellung unterfassen die Verriegelungshaken 8 die untere Platte 2 in der Weise, dass das Werkzeug auch unter dem erhöhten Innendruck im Formnest 7 nicht aufklappen kann.

Der Gelenkzapfen 9 ist in besonderer Weise ausgeführt; zwischen seinen beiden Lagerstellen in den Lagerböcken 10 hater einen im Durchmesser grösseren Bereich 11, der zylindrisch gestaltet, jedoch um das Mass x gegenüber den beiden Lagerstellen exzentrisch angeorodnet ist. Die beiden Endzapfen sind mit 12.bezeichnet.

Der Bereich 11 dient zur Lagerung des gegabelten oberen Endes der Verriegelungshaken 8; zwischen den beiden Schenkeln 13 der Gabel ist ebenfalls im Bereich 11 ein nach oben abstehender Schwenkhebel 14 gelagert, der im Gegensatz zum Verriegelungshaken 8 durch einen Stift 15 drehfest mit dem Lagerzapfen verbunden ist.

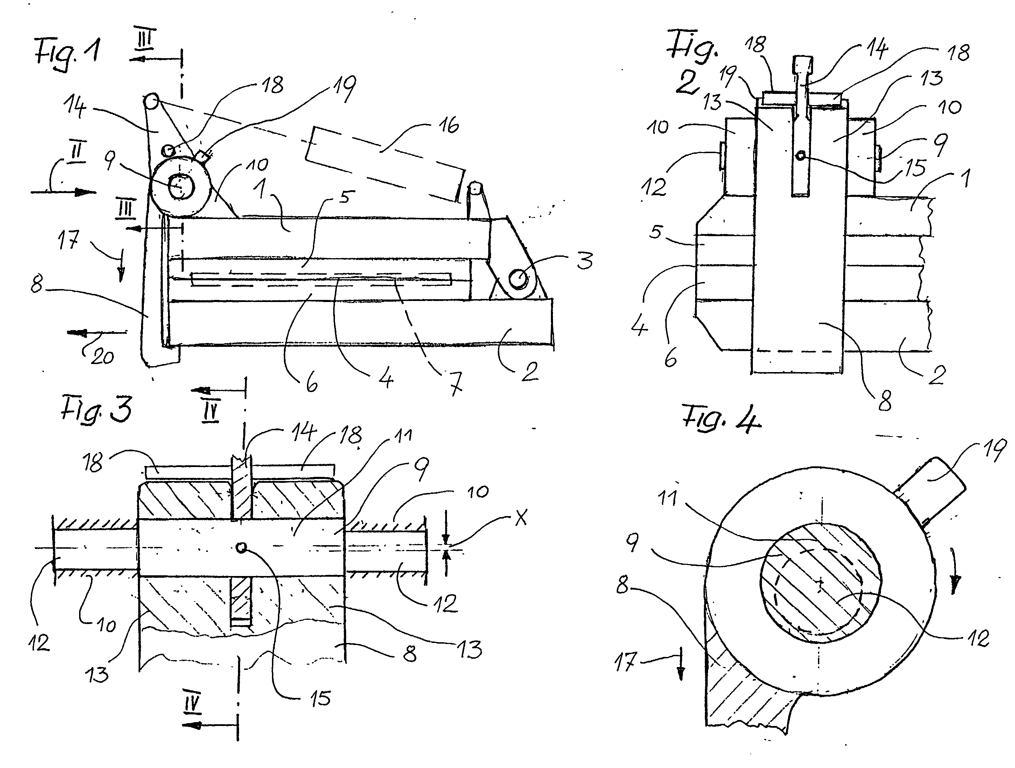

Durch eine Verschwenkung des Schwenkhebels 14 erfolgt somit eine Verdrehung des Gelenkzapfens 9. Da sich in der Wirkstellung des Verriegelungshakens 8 der Gelenkzapfen 9 bzw. der Exzenter in seiner oberen Endstellung befindet ( vgl. Fig. 4 ), wird somit bei einer Verschwenkung des Schwenkhebels 14 nach hinten - vorzugsweise durch einen angedeuteten Arbeitszylinder 16 bewirkt - der Verriegelungshaken 8 gegen seine Wirkrichtung, also nach unten abgesenkt, um so eine Entlastung der beiden Verriegelungshaken 8 herbeizuführen. Das Absenken erfolgt im Sinne des Pfeiles 17.

Der Schwenkhebel 14 weist zwei seitlich abstehende Mitnehmer 18 auf, die nach einem Schwenkweg des Schwenkhebels 14 von etwa 30 - 70° auf einen Vorsprung 19 der Lageraugen des Verriegelungshakens 8 auftreffen und diesen nunmehr in die Ruhestellung, also in Richtung des Pfeiles 20 verschwenken. Diese Verschwenkung kann ohne grössere Kraftanstrengung erfolgen, weil zuvor die erwähnte Entlastung bewirkt worden war.

Nach dem Öffnen des Werkzeuges, der Entnahme des Werkstückes und der Neubeschickung des Formennestes 7 erfolgt ein Zurückschwenken der Verriegelungshaken 8 in die Stellung gemäss Zeichnung, wozu - wenn eine selbsttätige Schwerkraftverschwenkung nicht eintreten kann - der Schwenkhebel 14 mit seinen Mitnehmern 18 herangezogen werden kann.

Da das Formnest nur über eine geringe Höhe verfügt bzw. vergleichsweise dünnwandige Werkstücke abgeformt werden, genügt eine geringe Exzenterverstellung, um eine Entlastung der Verriegelungshaken 8 herbeizuführen, jedoch ist es möglich, die Entlastungsbewegung durch eine entsprechende Exzentrizität zu vergrössern bzw. der erforderlichen Bewegung des Verriegelungshakens 8 anzupassen.

Auch kann das Werkzeug derart ausgeführt sein, dass das oder die Formnester unmittelbar in die Platten 1, 2 eingearbeitet sind. Ferner können auch weitere, übereinander angeordnete Formen bzw. Formnester vorgesehen werden.

## Patentansprüche

1. Werkzeug zum Abformen mit einer Verriegelung für Teile des Werkzeuges, bei der an einem Teil des Werkzeuges ein Verriegelungshaken schwenkbar gelagert ist, der in der Wirkstellung ein anderes Teil des Werkzeuges erfasst und nach dem Abformen des Werkstückes zum Öffnen des Werkzeuges in eine Ruhestellung verschwenkbar ist, wobei der Gelenkzapfen (9) des Verriegelungshakens (8) als Exzenter ausgebildet und derart verdrehbar ist, dass der Verriegelungshaken (8) zu seiner Entlastung gegen seine Wirkrichtung bewegbar ist, wobei ein Schwenkhebel (14) zum Verschwenken des Verriegelungshakens (8) vorgesehen ist, der drehfest mit dem Gelenkzapfen (9) verbunden ist, **dadurch gekennzeichnet, dass** der Schwenkhebel (14) mit einem ersten Schwenkweg den Gelenkzapfen (9) verdrehen kann und mit einem anschließenden zweiten Schwenkweg den Verriegelungshaken (8) in seine Ruhestellung verschwenken kann, wobei der Verriegelungshaken (8) einen Vorsprung (19) und der Schwenkhebel (14) Mitnehmer (18) aufweisen zum Auftreffen des Mitnehmers (18) auf den Vorsprung (19) des Verriegelungshakens (8) nach einer Verdrehung des Gelenkzapfens (9).

2. Werkzeug nach Anspruch 1, **dadurch gekennzeichnet, dass** der Verriegelungshaken (8) an seinem dem Gelenkzapfen zugekehrten Ende gegabelt und der Schwenkhebel (14) zwischen den Schenkeln (13) der Gabel angeordnet ist.

3. Werkzeug nach Anspruch 1, **dadurch gekennzeichnet, dass** die Mitnehmer seitlich am Schwenkhebel (14) angeordnete, abstehende Zapfen (18) sind.

4. Werkzeug nach Anspruch 1, **dadurch gekennzeichnet, dass** sich die Lagerstelle (10) für den Gelenkzapfen (9) in Höhe oder nahe oberhalb des oben gelegenen Teils (1) des Werkzeuges befindet, wobei sich der Verriegelungshaken (8) nach unten und der Schwenkhebel (14) nach oben erstreckt.

5. Werkzeug nach Anspruch 4, **dadurch gekennzeichnet, dass** ein oder mehrere Arbeitszylinder (16) für den Schwenkhebel (14) vorgesehen sind, die oberhalb des oben gelegenen Teils (1) des Werkzeuges angeordnet und mit ihrem hinteren Ende im Bereich der Scharnierstelle (3) für die Teile (1, 2) des Werkzeuges am oberen Teil befestigt sind.

6. Werkzeug nach Anspruch 1, **dadurch gekennzeichnet, dass** zwei Verriegelungshaken (8) vorgesehen sind, von denen der eine in der bei Betrachtung der Stirnseite des Werkzeuges linken Hälfte und der andere in der rechten Hälfte des Werkzeuges wirksam ist.

7. Werkzeug nach Anspruch 1, **dadurch gekennzeichnet, dass** der Verriegelungshaken (8) von seiner Ruhestellung aus aufgrund seines Eigengewichtes selbsttätig in seine Wirkstellung einfallen kann.

8. Werkzeug nach Anspruch 1, **dadurch gekennzeichnet, dass** die Teile (1, 2) scharnierartig, klappbar miteinander verbunden sind und sich der bzw. die Verriegelungshaken (8) an der dem Scharnier (3) gegenüberliegenden Seite des Werkzeuges befinden.

9. Werkzeug nach Anspruch 1, **dadurch gekennzeichnet, dass** der Schwenkhebel (14) an dem exzentrischen Bereich (11) des Gelenkzapfens (9) gelagert ist.

10. Werkzeug nach Anspruch 1, **dadurch gekennzeichnet, daß** der Gelenkzapfen (9) beidendig gelagert und der exzentrische Bereich zwischen den beiden Lagerstellen angeordnet ist.

## Claims

1. Shaping tool provided with a means for locking parts of the tool, wherein a locking hook is pivotably mounted on one part of the tool, which hook grips in the operative position another part of the tool and, after the workpiece has been shaped, is pivotable into an inoperative position to open the tool, a pivot pin (9) of the locking hook (8) being in the form of an eccentric and being twistable in such a manner that the locking hook (8) is displaceable in a direction in opposition to its operative direction for it to be relieved of load, a pivotal lever (14) being provided to pivot the locking hook (8), which is non-rotatably connected to the pivot pin (9), **characterised in that** the pivotal lever (14) can twist the pivot pin (9) with a first pivotal movement and can pivot the locking hook (8) into its inoperative position with a subsequent second pivotal movement, the locking hook (8) having a projection member (19), and the pivotal lever (14) having entrainment means (18) for the entrainment means (18) to encounter the projection member (19) of the locking hook (8) after the pivot pin (9) has been twisted.

2. Tool according to claim 1, **characterised in that** the locking hook (8) is bifurcated at its end facing the pivot pin, and the pivotal lever (14) is disposed between the side portions (13) of the fork.

3. Tool according to claim 1, **characterised in that** the entrainment means are protruding pins (18), which are disposed laterally on the pivotal lever (14).

4. Tool according to claim 1, **characterised in that** the mounting location (10) for the pivot pin (9) is on a level with or closely situated above the upper part (1) of the tool, the locking hook (8) extending downwardly, and the pivotal lever (14) extending upwardly.

5. Tool according to claim 4, **characterised in that** one or more working cylinders (16) are provided for the pivotal lever (14), which cylinders are disposed above the upper part (1) of the tool and are mounted on the upper part with their rear end in the region of the hinge location (3) for the parts (1, 2) of the tool.

6. Tool according to claim 1, **characterised in that** two locking hooks (8) are provided, one of which is active in the left-hand half of the tool, when viewed with respect to the end face of the tool, and the other locking hook is active in the right-hand half of the tool.

7. Tool according to claim 1, **characterised in that**, because of its inherent weight, the locking hook (8) can automatically drop from its inoperative position into its operative position.

8. Tool according to claim 1, **characterised in that** the parts (1, 2) are pivotably interconnected in a hinge-like manner, and the locking hook or hooks (8) is or are situated on the side of the tool situated opposite the hinge (3).

9. Tool according to claim 1, **characterised in that** the pivotal lever (14) is mounted on the eccentric region (11) of the pivot pin (9).

10. Tool according to claim 1, **characterised in that** the pivot pin (9) is mounted at each end, and the eccentric region is disposed between the two mounting locations.

## Revendications

1. Outil de moulage comprenant un verrouillage de partie de l'outil, dans lequel il est monté basculant sur une partie de l'outil un crochet de verrouillage qui prend en position active une autre partie de l'outil et après le moulage de la pièce peut être basculé pour ouvrir l'outil et le mettre dans une position de repos, le tourillon (9) d'articulation du crochet (8) de verrouillage étant constitué en excentré et pouvant être tourné de façon à ce que le crochet (8) de verrouillage puisse pour son délestage, se déplacer dans le sens opposé au sens où il agit, et il est prévu pour faire basculer le crochet (8) de verrouillage un levier (14) de basculement qui est solidaire en rotation du tourillon (9) d'articulation, **caractérisé en ce que** le levier (14) d'articulation peut être tourné par un premier trajet de basculement du tourillon (9) d'articulation et peut par un deuxième trajet de basculement venant ensuite faire basculer le crochet (8) de verrouillage pour le faire venir en sa position de repos, le crochet (8) de verrouillage ayant une saillie (19) et le levier (14) de basculement un entraîneur (18) pour que l'entraîneur (18) vienne sur la saillie (19) du crochet (8) de verrouillage après une rotation du tourillon (9) d'articulation.

2. Outil suivant la revendication 1, **caractérisé en ce que** le crochet (8) de verrouillage est fourchu à son extrémité tournée vers le tourillon d'articulation et le levier (14) de basculement est disposé entre les branches (13) de la fourche.

3. Outil suivant la revendication 1, **caractérisé en ce que** les entraîneurs sont des tourillons (18) en saillie disposés latéralement au levier (14) de basculement.

4. Outil suivant la revendication 1, **caractérisé en ce que** le point (10) de palier du tourillon (9) d'articulation est au niveau ou un peu au-dessus de la partie (1) supérieure de l'outil, le crochet (8) de verrouillage s'étendant vers le bas, et le levier (14) de basculement vers le haut.

5. Outil suivant la revendication 4, **caractérisé en ce qu'**il est prévu pour le levier (14) de basculement un ou plusieurs vérins (16) de travail qui sont disposés au-dessus de la partie (1) supérieure de l'outil et qui sont fixés par leur extrémité arrière à la partie supérieure dans la région du point (3) de charnière pour les parties (1) et (2) de l'outil.

6. Outil suivant la revendication 1, **caractérisé en ce qu'**il est prévu deux crochets (8) de verrouillage dont l'un est efficace lorsque l'on considère le côté frontal de l'outil dans la moitié gauche et l'autre dans la moitié droite de l'outil.

7. Outil suivant la revendication 1, **caractérisé en ce que** le crochet (8) de verrouillage peut tomber automatiquement sous son propre poids de sa position de repos à sa position active.

8. Outil suivant la revendication 1, **caractérisé en ce que** les parties (1) et (2) sont reliées entre elles à rabattement du type à charnière et le ou les leviers (8) de verrouillage se trouvent du côté de l'outil qui est opposé à la charnière (3).

9. Outil suivant la revendication 1, **caractérisé en ce que** le levier (14) de basculement est monté sur la partie (11) excentrée du tourillon (9) d'articulation.

10. Outil suivant la revendication 1, **caractérisé en ce que** le tourillon (9) d'articulation est monté sur palier des deux côtés et la partie excentrée est disposée entre les deux points de palier.
